# EUROPEAN PATENT APPLICATION

(11) **EP 3 373 625 A1**
(43) Date of publication of application: **12.09.2018**
(21) Application number: 17305255.6
(22) Date of filing: 09.03.2017
(51) Int. Cl.: H04W 12/06, H04W 4/00

(54) **METHOD AND APPARATUS FOR OPTIMIZING DATA EXCHANGE BETWEEN A FIRST AND AT LEAST ONE SECOND WIRELESS COMMUNICATION DEVICE**

(71) Applicant: GEMALTO SA, 92190 Meudon (FR)
(72) Inventor: SCHMITT, Sébastien, 92190 Meudon (FR); MAUNIER, Gérald, 92190 Meudon (FR); TRESSOL, Ludovic, 92190 Meudon (FR); DAO, Frédéric, 92190 Meudon (FR)
(74) Representative: Delaval, Guillaume Laurent

(57) **Abstract**

This invention relates to a method for optimizing data exchanges between a first wireless communication device (100) called central device and at least a second wireless communication device, wherein two interaction areas (130, 140) are defined relatively to the position of the central device (100). The method comprises the steps of: detecting if the second wireless communication device is localized in the pre-authentication area (140) associated with the central device (100); authenticating the central device (100) and the second wireless device if not already authenticated; upon successful authentication of the second wireless device, providing the central device (100) and the second wireless communication devices with at least one cryptographic key to be used for exchanging data securely when the second wireless communication device is in the exchange area associated with the central device (100).

## Description

### TECHNICAL FIELD

The present invention relates to a method for optimizing data exchanges between a first and at least one second wireless communication device. It is applicable to the Internet of things and vehicle-to-everything (V2X) technologies.

### BACKGROUND OF THE INVENTION

The international Telecommunication Union (ITU) defines the Internet of Things (IoT) in the ITU-T Y.2060 recommendation as a "global infrastructure for the information society, enabling advanced services by interconnecting (physical and virtual) things based on existing and evolving interoperable information and communication technologies". The Internet of Things integrates different technologies including Machine-to-Machine (M2M) communications referring to the technologies enabling direct communications between devices. Further, M2M communications can be used in the context of vehicle-to-everything (V2X) communications, that is to say between a first wireless communication device embedded in a vehicle and a second wireless communication device implemented on another material such as a second vehicle, an infrastructure or a pedestrian.

The number of IoT devices is growing fast and devices like car embedded wireless communication devices will have to manage huge volumes of data. In some scenarios like autonomous vehicles, critical decisions have to be made instantaneously based on data received from other devices. It is crucial in term of security that this information is trustable and comes from an authenticated device. To achieve these goals, the various wireless communication devices have to trust each other as soon as possible. One problem is that verifying identity and trust level of a large number of surrounding devices is time consuming. There is therefore a need to increase the speed of establishment for this trust relationship between wireless communication devices.

### SUMMARY OF THE INVENTION

This invention relates to method for optimizing data exchanges between a first wireless communication device called central device and at least a second wireless communication device, wherein two interaction areas are defined relatively to the position of the central device, the first interaction area called exchange area comprising the central device and the second interaction area called pre-authentication area being defined in a way that it has to be crossed by said second wireless communication device for it to enter into the exchange area. The method comprises the steps of:
- detecting if the second wireless communication device is localized in the pre-authentication area associated with the central device;
- authenticating the central device and the second wireless device if not already authenticated;
- upon successful authentication of the second wireless device, providing the central device and the second wireless communication devices with at least one cryptographic key to be used for exchanging data securely when the second wireless communication device is in the exchange area associated with the central device.

As an example, the pre-authentication area can be defined as an area surrounding the exchange area.

According to an aspect of the invention, a first and a second cryptographic key pairs can be used for exchanging data securely between the central device and the second wireless communication devices when localized in the exchange area, a cryptographic key pair comprising a private key and a public key, the private key of the first pair and the public key of the second pair being provisioned in the central device, the private key of the second pair and the public key of the first pair being provisioned in the second wireless communication central device.

According to another aspect, the private key of the first key pair is used by the central device to sign data sent to the second wireless communication device.

According to an example, the private key of the second key pair is used by the second wireless communication device to sign data sent to the central device.

According to an example, the method can also implement a step of estimating the localization of the central device and the second wireless communication device.

The invention also relates to a system for optimizing the secure exchanges of data between a first wireless communication device called central device and at least one second wireless communication device comprising at least one server configured to implement the method as presented above.

According to an example, the system comprises a first server in charge of localizing said wireless communication devices and a second server in charge of establishing a trusted relation between the central device and the at least one second communication device by detecting in which interaction area is localized the second wireless communication device, authenticating said devices and if the second wireless communication device is localized in the pre-authentication area associated with the central device, providing the central device and the second wireless communication devices with at least one cryptographic key to be used for exchanging data securely when the second wireless communication device is in the exchange area associated with the central device.

According to an example, the at least one server is implemented into the wireless communication devices.

According to an example, the at least one server is remotely connected to the wireless communication devices through a wireless communication network.

According to an example, the wireless communication devices are configured to estimate their position and to report it to the at least one server allowing to determine in which interaction area associated to the central device is localized the second wireless communication device.

According to an example, the wireless communication devices are configured to determine at least a vector representative of their velocity and/or acceleration and to report it to the at least one server, the shape of the interaction area being adapted as a function of this vector.

According to an example, a second wireless communication device is localized outside of the interaction areas is nevertheless considered as localized in the pre-authentication area if its reported velocity and/or acceleration vectors shows that said device moves toward said pre-authentication area and that the norm or the vector is greater that a given threshold.

The invention also relates to a wireless communication device called central device associated with two interaction areas defined relatively to the position of the central device, the first interaction area called exchange area comprising the central device and the second interaction area called pre-authentication area being defined in a way that it has to be crossed by said second wireless communication device for it to enter into the exchange area. The central device is configured to communicate with at least one second wireless communication device and, upon successful authentication of the second wireless device when it is localized in the pre-authentication area, to receive at least one cryptographic key to be used for exchanging data securely with the second wireless communication device when localized in the exchange area associated with the central device.

According to an example, the wireless communication device is configured to send data to the second wireless communication device in the form of a message comprising said data and a signature determined by applying at least one of the provisioned session keys to the data.

According to an example, the data and its associated signature are sent together with an identifier of the central device.

According to an example, the wireless communication device is configured to receive data from the second wireless communication device in a message associated with a digital signature and to verify the received signature using one of the provisioned session keys in order to check that the received data can be trusted.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 illustrates the principle of pre-establishing a trusted relationship between a first wireless communication device and at least one second wireless communication device;
- Figure 2 provides a first example of sequence diagram illustrating an embodiment of the invention in which a trusted relation between wireless communication devices is established by at least one remote server;
- Figure 3 provides a second example of sequence diagram illustrating an embodiment of the invention in which a trusted relation between wireless communication devices is established by themselves.
- Figure 4 is a schematic representation illustrating several improvements that can be considered in order to optimize the establishment of a trusted relation between several wireless communication devices.
- Figures 5A, 5B and 5C illustrate how the motion and environment of a vehicle embedding a wireless communication device can be taken into account in order to adapt the shape and size of its associated interaction areas.

### DETAILED DESCRIPTION

This invention is a way to optimize the treatment of high-speed data exchanges between moving devices. For that purpose, the identity of the devices are pre-processing in order to establish a trusted relationship before actual data communication happens.

According to the invention, a wireless communication device anticipates authentication of a second wireless communication device coming in its vicinity and establishes a trusted relationship. The two wireless communication devices are then in position of exchanging data rapidly when needed.

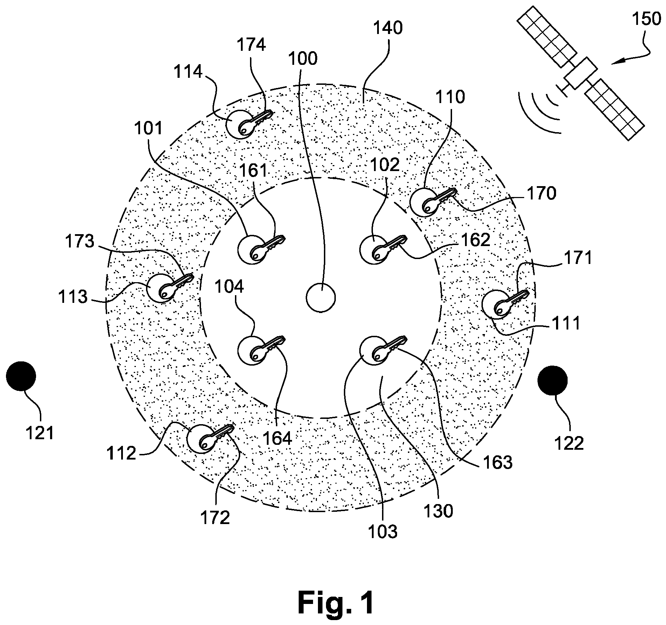

**Figure 1** illustrates the principle of pre-establishing a trusted relationship between a first wireless communication device and at least one second wireless communication device.

In the following description, a wireless communication device designates a device capable or sending and receiving data on a wireless interface. It can be implemented thanks to a combination of hardware and software and support one or several wireless technologies such as Wi-Fi, Bluetooth, Universal Mobile Telecommunications System (UMTS), LTE (Long Term Evolution), Global System for Mobile Communications (GSM).

A first wireless communication device 100 is represented at the centre of the figure. The proposed method will carry out a set of processing stages in order to create a trusted relationship between this first wireless communication device 100 and the one or several second wireless communication devices that are likely to exchange data with it.

For that purpose, two types of interaction areas are defined. An interaction area is an area that is associated to a wireless communication device also designated as "central device". For a wireless communication device entering into an interaction area associated to a given central device, a trusted relation between them is either already established or about to be established. A trusted relation is considered as established when the two devices are authenticated and capable of exchanging data securely.

A first interaction area 130 is designated as an exchange area and is an area in which the wireless communication devices 101-104 are supposed to exchange data with the first device 100. In Figure 1, the exchange area 130 is delimited by a circle centred on the first wireless communication device 100. The skilled person will appreciate that this simple example is taken for explanatory purposes and that other configurations of the exchange area can also be considered in the scope of the proposed method. Four wireless communication devices 101-104 are located in this area.

A second interaction area 140 is called the pre-authentication area and is chosen such that it surrounds the exchange area 130. It is such that a wireless communication device which is about entering in a given exchange area has necessarily to cross its associated pre-authentication area.

According to this example, the pre-authentication area 140 corresponds to the area localized between by the circle delimiting the exchange area and a second circle of larger diameter centred on device 100. Five wireless communication devices 110-114 are located on this area.

In Figure 1, the exchange 130 and pre-authentication area 140 are defined as surfaces defined using curves such as circle. However, in a real implementation, these will likely be defined as volumes such as spheres, spheroids or cylinders.

The pre-authentication area is an area in which the wireless communication devices 110-114 are not exchanging data with the central device 100, but because of their positions, are identified as likely to exchange data with device 100 in a near future. Said differently, when a wireless communication device is localized in the pre-authentication area 140, it is identified as a candidate that is likely to enter soon in the exchange area 130 associated to the central device 100.

The wireless communication devices are localized using state-of-the-art techniques and their positions allow to determine if a given wireless communication device is in the pre-authentication area 140 or in the exchange area 130 as defined for another wireless communication device 100 of the system.
If a wireless communication device, for example device 112, is localized as entering in the pre-authentication area 140 associated to the central device, then an authentication procedure is launched with the aim of identifying if the central/first device and the devices localized in the pre-authentication area can be trusted. The authentication step can be implemented using already existing technologies.
The authentication is the process for each device to assess the identity of the other device.
The authentication step can be implemented using already existing technologies directly between the communication devices or indirectly via a trusted third party.
For example, the authentication protocols can be based on keys or certificates. The wireless communication devices can expose their certificates signed by certificate authorities, such as a device maker, a government, controlling authorities (technical control) or auto repair shop.
In case of direct authentication, each wireless communication device is able to verify the complete certification chain of the other device.
In case of indirect authentication, each wireless communication device can rely on a centralized authentication server to authenticate the other device.

According to this example, the authentication step aims first at verifying the identity of a given wireless communication device and that this wireless communication device is trusted and can be therefore allowed to communicate with other communications devices.

According to an embodiment, a verification system comprising one or several servers maintaining a list of wireless communication devices registered as trusted can be used. These servers are included or connected to a communication network allowing to perform the authentication of the wireless communication devices that are localized into the pre-authentication area.

Once authenticated, the trusted relationship between the wireless communication devices 100 and 112 can be enhanced by provisioning both devices with one or several session keys for exchanging data securely when in the exchange area 130.

According to one embodiment of the invention, for each wireless communication device 110-114 entering in the pre-authentication area 140 and correctly authenticated, at least a cryptographic key 170-174 is provided. One or several associated cryptographic keys are also provisioned in the central device 100. Then, once entering into the exchange area 130, pre-authenticated wireless communication devices 101-104 can use their cryptographic keys 161-164 to encrypt and/or to sign data exchanged with the central device 100.

According to this example, wireless communication devices 121 and 122 are outside of the pre-authentication areas 140 and therefore not authenticated. As a consequence, data exchange with the central device 100 is impossible.

In one embodiment, the wireless communication devices are able to communicate with one or several remote servers through a communication network. The communication network is for example a wireless communication network implementing technologies such as LTE (Long Term Evolution) or UMTS (Universal Mobile Telecommunications System). Other technologies can of course be considered in the context of this invention. For example, a satellite-based 150 communication network can be used for that purpose.

According to an aspect of the invention, the communication system comprises one or several servers implementing one or several functions among: locating the wireless communication devices, determining if the wireless communication devices are localized in a pre-authentication area or in an exchange area of a subsequent device and provisioning the session keys required for exchanging data securely.

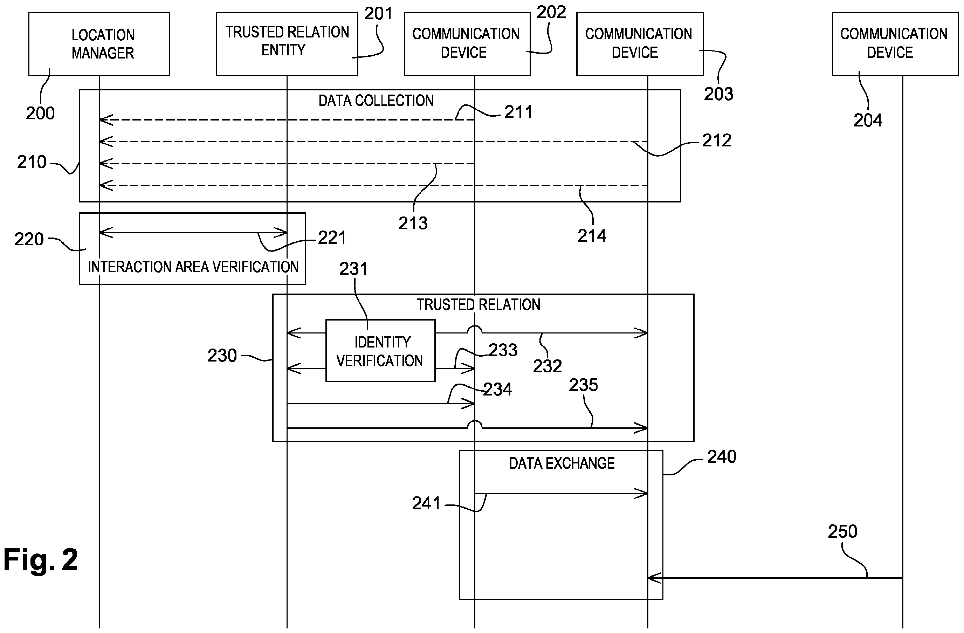

**Figure 2** provides an example of sequence diagram illustrating an embodiment of the invention in which a trusted relation between wireless communication devices is established by at least one remote server.

In this example, a first server 200 is in charge of providing location services. The location services includes for example the monitoring of routes that the devices will follow to reach a destination. A second server called trusted relation entity 201 is in charge of determining which wireless communication device is in which interaction area relatively to one or several other wireless communication devices. Three wireless communication devices 202, 203, 204 are also represented. The first and second servers can be associated to a determined geographical area such as a country, a state, a town or a district.

The first phase 210 that is represented in this sequence diagram is a data collection phase. In this example, the localisation server 200 collects data from the wireless communication devices 202 and 203. The wireless communication device 202 reports 211, 213 its coordinates periodically or based on a detected event, for example a move corresponding to a distance that is greater than a predefined value. The coordinates can be estimated using different localisation technologies, using satellite based systems such as Galileo, Global Positioning System (GPS), Glonass or other technologies such as triangulation using existing wireless networks.

The wireless communication device 203 is also reporting 212, 214 its position to the localisation server 200 in the same way.

For example, the position is reported as a set of geographic coordinates such as latitude, longitude and elevation.

In addition to the coordinates, other data can also be reported. For example, velocity and/or acceleration vectors can be calculated by the wireless communication devices and then sent to the localisation server 200. Alternatively, these vectors can be calculated by the localisation server 200 based on the coordinates that are reported by the trusted relation entity 201. This alternative has the advantage of reducing the amount of signalling transiting through the air interface. However, calculating and reporting the vectors by the devices can be more precise as more localisation estimations (i.e. estimated coordinates) can be used to derive the speed and acceleration vectors.

The second phase 220 aims at estimating which wireless communication device is in which interaction area. This can be done for each of the wireless communication devices that are belonging to the system or for a selected subset, for example for the wireless communication devices that are located on a motorway or on a national road. According to this example, the trusted relation entity 201 is in charge of these estimations. It accesses 221 to the localisation server 200 and collects the localisation data required for that purpose.

The following estimations can be carried out by the trusted relation entity 201:
- for a given wireless communication device, determine which other wireless communication devices are in the pre-authentication area;
- for a given wireless communication device, determine which other wireless communication devices are in the exchange area;
- for the wireless communication devices that are localized in a given pre-authentication areas, determine which of them are not yet authenticated.

The third phase 230 presented in the sequence diagram of figure 2 aims at setting up a trusted relationship between wireless communication devices when localized into a pre-authentication area associated with a given central device. In this example, the wireless communication device 203 is localized in the pre-authentication area associated with wireless communication device 202. As a consequence, the identity of wireless communication devices 202 and 203 is verified 231 by the trusted relation entity 201. If these identities are correctly verified, one or several session keys are respectively distributed 234, 235 to the wireless communication devices 202 and 203. At this stage, a trusted relationship is considered established between these two wireless communication devices.

The fourth phase 240 corresponds to a data exchange. At this stage, wireless communication device 203 is localized in the exchange area of wireless communication device 202. As an example, the vehicle embedding wireless communication device 202 brakes because of a danger and this is an event that is configured to be reported to all the vehicles localized into the exchange area associated to wireless communication device 202. As a consequence, a signalling message is transmitted 241 by the wireless communication device 202 to the wireless communication device 203. This message comprises for example a bit sequence carrying the information "I brake because there is a danger", an identifier of wireless communication device 202 and a signature.

According to an embodiment, the signature is calculated by applying on the aforementioned bit sequence the session key provisioned during phase 230 in wireless communication devices 202, 203. The signature is then verified by wireless communication device 203 using the session key that have also been provisioned for that purpose.

During the data exchange phase 240, the wireless communication devices are already authenticated and a trusted relation is already established. Advantageously, the messages carrying time critical information are being transmitted in a straightforward manner as soon as data is available. No additional signalling exchanges with the localisation manager 200 or with the trusted relation entity 201 is anymore required. Getting information as fast as possible is crucial for the wireless communication devices for applications such as automatic decision making. In that case, the receiver of a given message is able to take the appropriate decision. An example of decision is "as I trust the information I received, I need to brake to avoid a collision".

Data that is sent 250 by a wireless communication device 204 that has not been correctly authenticated nor provisioned with the required session keys will be ignored as the receiving wireless communication device will not be able to check the signature associated to the message.

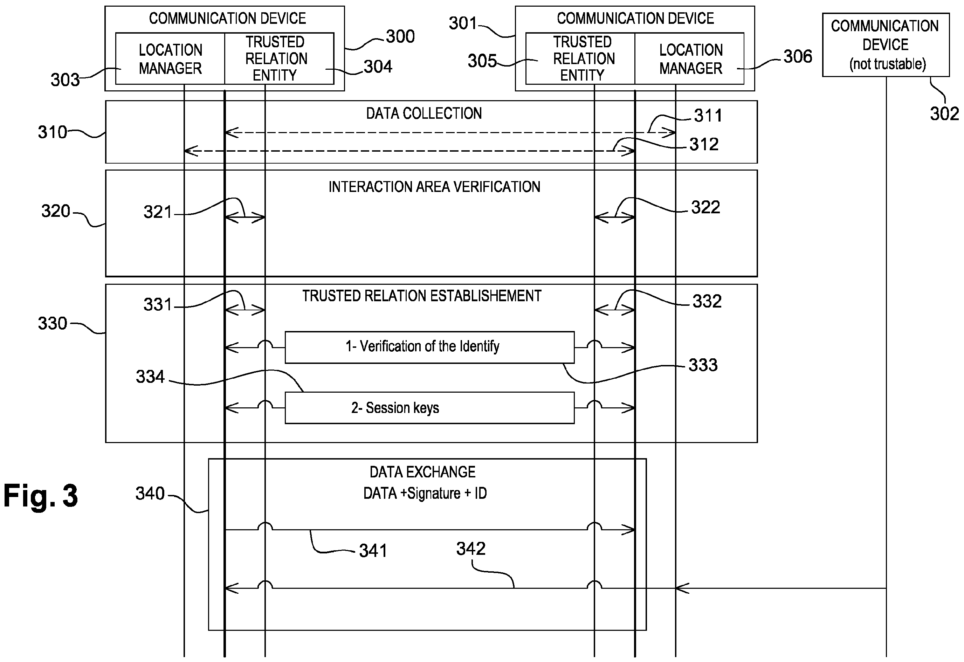

**Figure 3** provides an example of sequence diagram illustrating an embodiment of the invention in which a trusted relation between wireless communication devices is established by themselves.

In this example, three wireless communication devices 300, 301, 302 are represented. Two of them 300, 301 are capable to establish a trusted relation whereas the third one 302 is considered as non-trustable. Unlike the embodiments presented with Figure 2, the trusted relation is established without using any remote server. The functionalities of the aforementioned servers are implemented by the wireless communication devices.

The wireless communication devices are able to communicate together in order to implement different processing phases 310, 320, 330. For that purpose, a wireless communication device embeds at least two modules. The first one 303, 305 is designated as a localisation module and the second one 304, 306 as a trusted relation module and their function is respectively to localize the wireless communication devices and to establish a trusted relation between wireless communication devices when required for the purpose a data exchange. These modules can be implemented in software, in hardware or with a combination of hardware and software. Further, in this example, two modules are designated to carry out a set of functionalities. The skilled person will understand that the same set of functionalities can be carried out in a wireless communication device using a single module or any number of separate modules.

The first phase 310 depicted in the sequence diagram is a data collection phase. For example, the wireless communication device 300 estimates its position using a given technology and the coordinates are transmitted 311 to another wireless communication device 301 periodically and/or based on a specific event. This is also done similarly the other way around, that is to say that the wireless communication device 301 estimates is position using a given technology transmits 312 the estimated coordinates to the other wireless communication device 300 periodically and/or based on a specific event.

The estimated coordinates can be exchanged directly from a first wireless communication device to a second wireless communication device or using a wireless communication network, such as a UMTS or LTE network. A wireless ad-hoc network can also be used. In that case, no infrastructure is required.

The second phase 320 aims at determining by a given central device which are among the other wireless communication devices those that are located into an interaction area, and in particular which of them are in the pre-authentication area associated to said central device. For example, the trusted relation module 304 of the wireless communication device 300 estimates if the wireless communication device 301 is in its pre-authentication area thanks 321 to the coordinates collected during phase 310. In the same way, the trusted relation module 305 of the wireless communication device 301 estimates if the wireless communication device 300 is in its pre-authentication area thanks 322 to the coordinates collected during phase 310.

The third phase 330 illustrated in Figure 3 corresponds to the establishment of a trusted relation between wireless communication devices 300 and 301 which is located in the pre-authentication area associated 300. First, a mutual authentication is initiated 331, 332, 333 which the aim of verifying the identity of each wireless communication device 300, 301. This can be done autonomously by the devices or by using an external trusted server.

Then, at least a session key is shared 334 in order to be used for further data exchanges. As an example, wireless communication device 300 generates a first key pair comprising a first private key and a first public key and wireless communication device 301 generates a second key pair comprising a second private key and a second public key. Then, the first and second public keys are exchanged between the two wireless communication devices. The private keys can be used to generate the signature of a message to be transmitted from a device to another and the exchanged public keys can be used to check that the received messages have been sent by a trusted wireless communication device.

According to another aspect, the determination of the session keys can be based on elliptic curve technology and embedded certificates inside the devices.

The fourth phase 340 corresponds to a data exchange 341 between the wireless communication device 300 and the wireless communication device 301. At this stage, wireless communication device 301 is in localized in the exchange area of wireless communication device 300. A message can be transmitted by wireless communication device 301 to wireless communication device 300. This message comprises for example a bit sequence carrying the information "I brake because there is a danger", an identifier of the wireless communication device 301 and a signature. The signature is calculated by applying to the aforementioned bit sequence the session key, for example a private key securely stored by device 301. The signature is verified using the corresponding public key that has shared during phase 330. During the data exchange 340, a trusted relation is already established between devices 300 and 301. Therefore, the messages carrying time critical information can be transmitted in a straightforward manner as soon as data is available. No additional signalling exchange is required.

Data that is sent 342 by a wireless communication device 302 that has not been correctly authenticated nor provisioned with the required session keys will be ignored as the receiving wireless communication device will be unable to check the signature associated to the message.

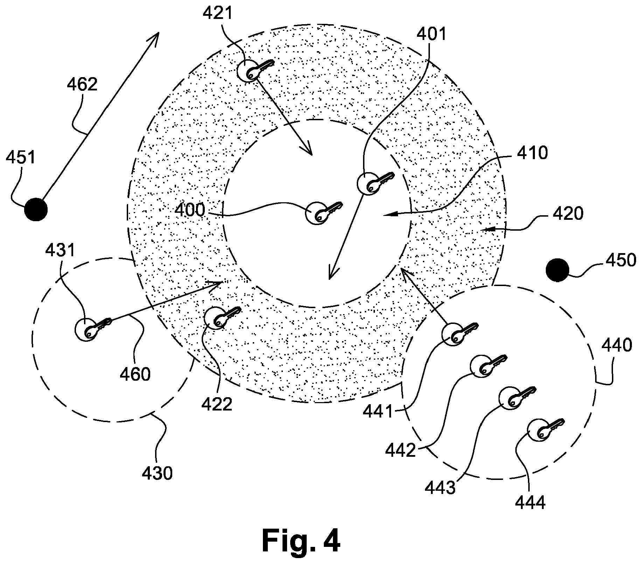

**Figure 4** is a schematic representation illustrating several improvements that can be considered in order to optimize the establishment of a trusted relation between several wireless communication devices.

A central device 400 is represented in the centre of this figure. It is associated with two interaction areas. The first interaction area is an exchange area 410 in which a wireless communication device 401 is able to exchange data with central device 400 as a trusted relation is already established between them. The second interaction area is a pre-authentication area 420. As three wireless communication devices 421, 422, 441 have been detected in this area 420, a trusted relation is established for them to exchange data rapidly with central device 410 when entering in the exchange area 410. This trusted relation implies verifying the identity of the wireless communication devices and providing them with session keys that will be later used to sign the exchanged data.

Outside of the two aforementioned interaction areas 410, 420, other wireless communication devices 431, 442, 443, 444, 450, 451 may also be present. The method can be optimized by considering one or several wireless communication devices as present in the pre-authentication area even if those are in reality outside.

According to one embodiment, a speed vector of the wireless communication devices is estimated by the system. Depending of the norm and/or direction of a given wireless communication device, it can be considered as located in the pre-authentication area 420.

As an example, wireless communication device 431 is located outside of the pre-authentication area. However, its speed vector 460 allows the system to anticipate its entrance in the pre-authentication area 420. Therefore, it can be decided to establish the trusted relation by verifying its identity and allocating a session key to this device. On the contrary, wireless communication device 450 is motionless and wireless communication device 451 is associated with a speed vector 462 which norm and direction shows that it will not enter in the pre-authentication area in a near future. Therefore, it is not required to establish a trusted relation for these two wireless communication devices 450, 451. Monitoring the norm and/or direction of the speed vector in addition to the localisation of the wireless communication devices is given as an example. Alternatives and optimizations can also be considered. For example, instead of the speed vector, the acceleration vector can be monitored. The norm and direction of the acceleration vector can also be taken into account in addition those of the speed vector.

According to another example, a set of wireless communication devices 441, 442, 443, 444 can be embedded in various vehicles belonging to a fleet of vehicles that are supposed to travel together. When a first wireless communication device 441 belonging to a fleet of vehicles is located in the pre-authentication area 420, the wireless communication devices 442, 443, 444 embedded into the other vehicles of the same fleet can also be considered as entering into the area and therefore, the trusted relation can be established for the whole fleet 440.

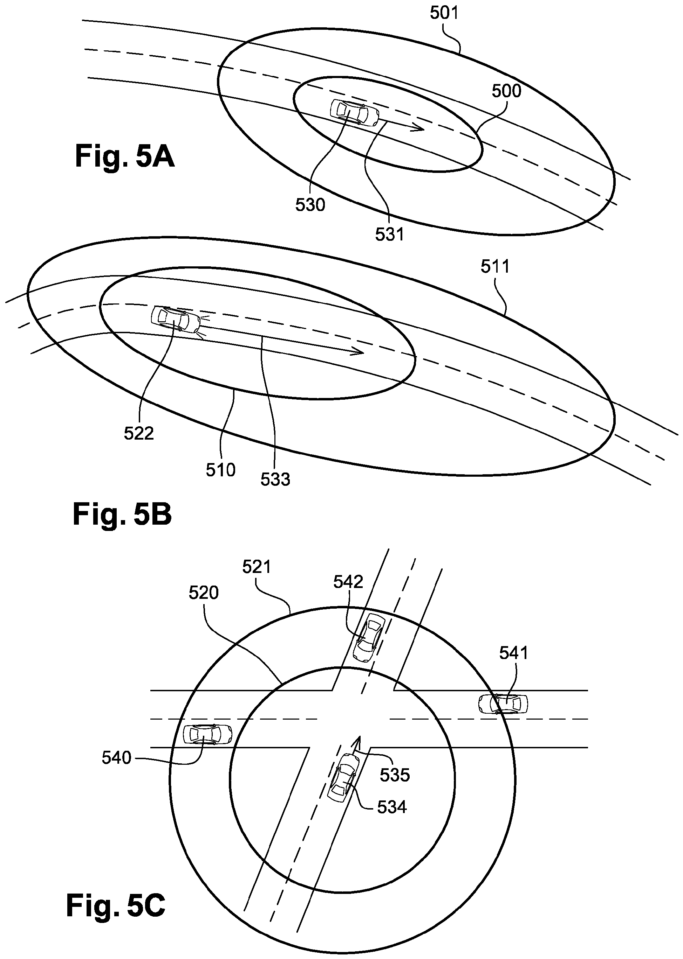

**Figures 5A, 5B and 5C** illustrate how the motion and environment of a vehicle embedding a wireless communication device can be taken into account in order to adapt the shape and size of its associated interaction areas. The size and the shape of the interaction areas as illustrated on these figures is for explanatory purpose only. The skilled person will understand that depending of the system configuration, the size of the interaction areas may be different. For example, the distance between the outline of an interaction area and its associated wireless communication area ranges from several meters towards several kilometres.

Figure 5A shows a vehicle, for example a car 530, embedding a wireless communication device with two associated interaction areas 500, 501. The first interaction area 500 is a data exchange area and is defined in this example by the volume inside of a spheroid. A spheroid is an ellipse that is rotated about its major axis. In this example, the major axis is corresponds to the direction of the speed vector associated to the wireless communication device 530. The second interaction area 501, namely the pre-authentication area, corresponds in this example to a volume obtained by subtracting the exchange area to a volume defined by a second spheroid containing the first one. According to this example, the parameters of the ellipses are chosen as a function of the norm and direction of the speed vector 531.

Figure 5B also represents a vehicle, for example a car 522, embedding a wireless communication device with two associated interaction areas 510, 511. This example corresponds to a similar situation to the one depicted with figure 5A, except that the norm of the speed vector 533 is significantly bigger than the one of the speed vector 531. The consequence is that the two spheroids used to define the two interaction areas 510, 511 are bigger. As the vehicle moves faster, it is useful to increase the size of the interaction areas. According to another aspect, if the speed is decreasing, the size of the interaction areas can be decreased accordingly.

Figure 5C represent a third situation in which a vehicle 534, for example a car, embeds a wireless communication device that is associated to two interaction areas, the first one being a data exchange area 520 and the second one 521 a pre-authentication area. As for the preceding situations, the interaction areas are defined using spheroids. According to the example the navigation context is taken into account in addition to the speed vector 535. Here, the vehicle 534 is approaching an intersection. Therefore, it can be useful to be in position of exchanging data with vehicles 540, 541 and 542. In that case, the spheroids are shaped almost like two spheres in order to embrace as many vehicles that are approaching the intersection as possible.

In another embodiment, a route determined for the wireless communication device can be used to define the shape of the interaction areas. For example, data such as the destination, the road type, the direction and the speed can be used for that purpose. The route is for example determined by the localization manager.

## Claims

1. A method for optimizing data exchanges between a first wireless communication device (100) called central device and at least a second wireless communication device, wherein two interaction areas (130, 140) are defined relatively to the position of the central device (100), the first interaction area (130) called exchange area comprising the central device (100) and the second interaction area (140) called pre-authentication area being defined in a way that it has to be crossed by said second wireless communication device for it to enter into the exchange area (130), the method comprising the steps of:
- detecting if the second wireless communication device is localized in the pre-authentication area (140) associated with the central device (100);
- authenticating the central device (100) and the second wireless device if not already authenticated;
- upon successful authentication of the second wireless device, providing the central device (100) and the second wireless communication devices with at least one cryptographic key to be used for exchanging data securely when the second wireless communication device is in the exchange area associated with the central device (100).

2. A method according to claim 1, wherein the pre-authentication area (140) is defined as an area surrounding the exchange area (130).

3. A method according to any of the preceding claims, wherein a first and a second cryptographic key pairs are used for exchanging data securely between the central device (100) and the second wireless communication devices when localized in the exchange area (130), a cryptographic key pair comprising a private key and a public key, the private key of the first pair and the public key of the second pair being provisioned in the central device (100), the private key of the second pair and the public key of the first pair being provisioned in the second wireless communication central device (100).

4. The method according to claim 3, wherein the private key of the first key pair is used by the central device (100) to sign data sent to the second wireless communication device.

5. The method according to claim 3 or 4, wherein the private key of the second key pair is used by the second wireless communication device to sign data sent to the central device (100).

6. The method according to any of the preceding claims, comprising the step of estimating the localization of the central device (100) and the second wireless communication device.

7. A system for optimizing the secure exchanges of data between a first wireless communication device (100) called central device and at least one second wireless communication device comprising at least one server configured to implement the method according to any of the preceding claims.

8. The system according to claim 7, comprising a first server (200) in charge of localizing said wireless communication devices and a second server (201) in charge of establishing a trusted relation between the central device (100) and the at least one second communication device by detecting in which interaction area (130, 140) is localized the second wireless communication device, authenticating said devices and if the second wireless communication device is localized in the pre-authentication area (140) associated with the central device (100), providing the central device (100) and the second wireless communication devices with at least one cryptographic key to be used for exchanging data securely when the second wireless communication device is in the exchange area associated with the central device (100).

9. The system according to claim 7 or 8, wherein the at least one server is implemented (303, 304, 305, 306) into the wireless communication devices (300, 301).

10. the system according to claim 7 or 8, wherein the at least one server are remotely connected to the wireless communication devices through a wireless communication network.

11. The system according to any of claims 7 to 9, wherein the wireless communication devices are configured to estimate their position and to report it to the at least one server allowing to determine in which interaction area (130, 140) associated to the central device (100) is localized the second wireless communication device.

12. The system according to claim 11, wherein the wireless communication devices are configured to determine at least a vector representative of their velocity and/or acceleration and to report it to the at least one server, the shape of the interaction area being adapted as a function of this vector.

13. The system according to claim 12, wherein a second wireless communication device that is localized outside of the interaction areas is nevertheless considered as localized in the pre-authentication area if its reported velocity and/or acceleration vectors shows that said device moves toward said pre-authentication area and that the norm or the vector is greater that a given threshold.

14. A wireless communication device (100) called central device associated with two interaction areas (130, 140) defined relatively to the position of the central device (100), the first interaction area (130) called exchange area comprising the central device (100) and the second interaction area (140) called pre-authentication area being defined in a way that it has to be crossed by said second wireless communication device for it to enter into the exchange area (130), wherein the central device (100) is configured to communicate with at least one second wireless communication device and, upon successful authentication of the second wireless device when it is localized in the pre-authentication area, to receive at least one cryptographic key to be used for exchanging data securely with the second wireless communication device when localized in the exchange area associated with the central device (100).

15. The wireless communication device (100) according to claim 14 being configured to send data to the second wireless communication device in the form of a message comprising said data and a signature determined by applying at least one of the provisioned session keys to the data.

16. The wireless communication device (100) according to claim 15, wherein the data and its associated signature are sent together with an identifier of the central device.

17. The wireless communication device (100) according to any of claims 14 to 16, configured to receive data from the second wireless communication device in a message associated with a digital signature and to verify the received signature using one of the provisioned session keys in order to check that the received data can be trusted.
